Europäisches Patentamt

European Patent Office

Office européen des brevets

(11) Veröffentlichungsnummer: **0 047 515**
**A2**

(12) **EUROPÄISCHE PATENTANMELDUNG**

(21) Anmeldenummer: 81106969.9

(22) Anmeldetag: 04.09.81

(51) Int. Cl.³: **B 08 B 3/02,** B 60 S 3/04

(30) Priorität: 06.09.80 DE 3033622
15.09.80 DE 3034769

(71) Anmelder: **Oberdorfer, Guido,**
**Guido-Oberdorfer-Strasse 11-16, D-7919 Bellenberg**
**(DE)**

(43) Veröffentlichungstag der Anmeldung: **17.03.82**
**Patentblatt 82/11**

(72) Erfinder: **Oberdorfer, Guido,**
**Guido-Oberdorfer-Strasse 11-16, D-7919 Bellenberg**
**(DE)**

(84) Benannte Vertragsstaaten: **AT BE CH GB LI NL SE**

(74) Vertreter: **Riebling, Günter, Dr. Ing. et al,**
**Rennerle 10 Postfach 3160, D-8990 Lindau (DE)**

(54) Arbeitsverfahren und Vorrichtung zur Ausübung des Verfahrens zur Reinigung von Gegenständen.

(57) In einem ersten Arbeitsgang werden Chemikalien über eine Niederdruckleitung (29) mit Niederdruck — z.B. dem Wasserleitungsdruck — aufgesprüht in einem zweiten Arbeitsgang wirken die Chemikalien bei abgeschaltetem Niederdruck ein und in einem dritten Arbeitsgang werden die Chemikalien über eine Hochdruckleitung (28) mit dem Hochdruckstrahl abgewaschen.

Die Erfindung ist ferner dadurch gekennzeichnet, dass das Gehäuse mindestens zweiteilig ausgebildet ist und zwar aus einem auf Rollen (68) verfahrbaren, nach oben offenen Metallgehäuse (62), das an der Oberseite von einer Abdeckhaube (57) abgedeckt ist, dass parallel zu einer vertikalen Wand des Gehäuses der Wasserbehälter (55) angeordnet ist, der sich bezüglich seiner Höhe sowohl in das Metallgehäuse als auch in die Abdeckhaube erstreckt und dass der Wasserbehälter mindestens eine Wand des Aufnahmeraumes für die Chemikalienbehälter (52) bildet.

- 1 -

---------------------------------------------------------

Arbeitsverfahren und Vorrichtung zur Ausübung des
Verfahrens zur Reinigung von Gegenständen

---------------------------------------------------------

Gegenstand der Erfindung ist ein Arbeitsverfahren und
eine Vorrichtung zur Ausübung des Verfahrens zur Reinigung von Gegenständen im Industriebereich, insbesondere
für den Pflegedienst an Tankstellen, bei Speditionen,
im Kfz-Bereich sowie im Landwirtschafts- und Haushaltsbereich, bei dem der zu reinigende Gegenstand mittels
einer Sprühpistole mit einem Wasser-Hochdruckstrahl gewaschen wird und dem Hochdruckstrahl reinigende und
pflegende Chemikalien beigemischt sind.

Ein eingangs genanntes Arbeitsverfahren und eine Vorrichtung zur Ausübung dieses Verfahrens ist in vielfältiger Form bekannt geworden. Es handelt sich hierbei
um die sogenannten Hochdruck-Reinigungsgeräte, bei denen
aus einem von einem Wasserzulauf im Flüssigkeitsstand
geregelten Flüssigkeitsbehälter, der gegebenenfalls
elektrisch beheizt wird, ein Wasserstrahl von einer
Hochdruckpumpe abgesaugt wird, die diesen Wasserstrahl
hoch verdichtet, gegebenenfalls Chemikalien beimischt
und einer Sprühpistole (Sprühlanze) zuführt. Aus dieser Sprühlanze wird ein Wasserstrahl mit hohem Druck,
aber geringer Menge, abgegeben. Dieser Wasserstrahl
hat wegen seines hohen Druckes eine starke schmutzabhebende Wirkung.

Um aber einen ausreichenden Reinigungseffekt erzielen
zu können, musste die Temperatur des Wasserstrahls sehr
hoch gewählt werden, was einen erheblichen Wärmebedarf
für das Hochdruckreinigungsgerät verursachte. Die Erhit-

-2-

zung des Wasserstrahls erfolgte entweder mittels des elektrisch beheizten Wasserbehälters oder mittels eines Ölbrenners in Verbindung mit einem Wärmetauscher. Bei der Reinigung mit einem Hochdruckstrahl allein ist die Einwirkzeit der Chemikalie auf den zu reinigenden Gegenstand relativ kurz. Ausserdem wird durch die hohe Geschwindigkeit des austretenden Strahles eine elektrostatische Aufladung des Reinigungsobjektes hervorgerufen, wodurch das Reinigungsergebnis beeinträchtigt wird.

Es ist auch bekannt, mittels eines Wasserschlauches, dem Chemikalien beigemischt werden (der einfachste Fall ist hier die Waschbürste mit Shampoostäbchen), eine entsprechende Reinigung des Gegenstandes vorzunehmen. Der Chemikalienauftrag erfolgt entweder mit einer speziellen Pumpe in Verbindung mit einer Sprühdüse oder aus einem mit Chemikalien gefüllten Behälter, der mit Druck beaufschlagt wird (Dispenser, Pflanzenspritze usw.) bzw. über eine Luftsprühpistole mit einem angeschraubten Reinigungsmittelbehälter.

Nachteil der bekannten Pumpen ist jedoch, dass aggressive Chemikalien nicht verwendet werden können. Zum anderen muss beim Wechseln von einem zum anderen Produkt erst der gesamte Sprühschlauch entleert und gespült werden, d.h., es wird wertvolle Zeit und es werden relativ teure Chemikalien verschwendet. Im übrigen besteht der Nachteil, dass die wasserlöslichen Reinigungsmittel nur in konzentrierter Form sich im Handel befinden und daher vor Gebrauch entsprechend verdünnt werden müssen.

Die vorliegende Erfindung hat sich die Aufgabe gestellt, ein Arbeitsverfahren und eine Vorrichtung zur Ausübung des Verfahrens der eingangs genannten Art so weiterzubilden, dass ohne grosse Arbeitsaufwendungen vom Niederdruckreinigungsbetrieb auf den Hochdruckreinigungsbetrieb übergegangen werden kann und dass das Arbeitsverfahren für sich genommen wesentlich wirksamer und kostengünstiger sowie schneller durchgeführt werden kann als eine Hochdruckreinigung oder eine Niederdruckreinigung für sich genommen.

Zur Lösung der gestellten Aufgabe ist die Erfindung dadurch gekennzeichnet, dass in einem ersten Arbeitsgang Chemikalien mit Niederdruck - z.B. dem Wasserleitungsdruck - aufgesprüht werden, dass in einem zweiten Arbeitsgang die Chemikalien bei abgeschaltetem Niederdruck einwirken und dass in einem dritten Arbeitsgang die Chemikalien mit dem Hochdruckstrahl abgewaschen werden.

Das vorliegende Arbeitsverfahren schlägt also eine Kombination aus einem Niederdruck- mit einem Hochdruckverfahren vor, wobei dem Hochdruckreinigungsverfahren ein Niederdruckreinigungsverfahren vorgeschaltet ist. Dies hat den wesentlichen Vorteil, dass die Chemikalien mittels Niederdruck aufgebracht werden, was einen besonders schonenden und sparsamen Chemikalienauftrag auf den zu reinigenden Gegenstand gewährleistet. Die Niederdruckreinigung wird nach dem Auftrag der Chemikalien in einem zweiten Arbeitsgang abgeschaltet, so dass die Chemikalien eine längere Zeit auf den zu reinigenden Gegenstand einwirken können. Danach wird dann auf die Hochdruckreinigung umgeschaltet und im dritten Arbeitsgang die Chemikalien mit dem Hochdruckstrahl abgewaschen. Dies gewährleistet eine besonders vollständige und gründliche Entfernung der Chemikalien, wobei gleichzeitig mit dem Hochdruckstrahl noch ein weiterer Reini-

gungseffekt (schmutzabhebende Wirkung des Hochdruck-
strahls) gewährleistet ist.

Das erfindungsgemässe vorgeschlagene Verfahren besteht
also aus einer Kombination eines Niederdruck- mit einem
Hochdruckreinigungsarbeitsgangs und ist in seiner Kombinationswirkung den bisher bekannten Verfahren weit
überlegen.

In einer Weiterbildung der vorliegenden Erfindung gemäss
dem Anspruch 2 ist es vorgesehen, dass in einem vierten
Arbeitsgang die von dem Hochdruckstrahl herrührenden
Wasserrückstände auf dem zu reinigenden Gegenstand mittels Pressluft abgeblasen werden. Diese Entfernung von
Wasserrückständen ist besonders bei der Motorreinigung
wichtig, aber auch bei der Reinigung von Zündverteilern,
Zündkerzen und anderen wasserempfindlichen Teilen.

Weiterer Vorteil dieser Maßnahme ist, dass mit dem
Pressluftstrahl noch weitere Chemikalien aufgebracht
werden können (Anspruch 6), wie z.B. Sprühwachs, Felgenreiniger, Insektenentferner usw. Es handelt sich
hierbei um Chemikalien, die nur in Verbindung mit Luft,
nicht aber in Verbindung mit Wasser ihre Reinigungswirkung entfalten. In der Regel sind dies nicht-wasserdispergierbare Chemikalien.

Das gesamte System, bestehend aus einer Kombination eines Niederdruckreinigungsverfahrens mit einem Hochdruckreinigungsverfahren und gegebenenfalls einem nachgeschalteten Luftreinigungsverfahren hat den Vorteil, dass mit
wesentlich niedrigeren Temperaturen (vorzugsweise einer
Temperatur von etwa 45° C) gearbeitet werden kann und dass hiermit wesentlich geringere Wassermengen bei geringeren Drücken verwendet werden. Das Gerät ist also hinsichtlich seines Energie- und Wasserverbrauchs sparsam und entfaltet gleichzeitig eine optimale Reinigungswirkung, wie sie bisher noch nicht bekannt war. Desweiteren werden an die Bedienungsperson keine so hohen Anforderungen an die exakte Führung des Sprühstrahles gestellt, wie es bei der Hochdruckreinigung vorher der Fall war, da derSchmutz durch die vorhergehende Niederdruckreinigung bereits gelöst wurde.

Das erfindungsgemäss beschriebene Gerät eignet sich auch in idealer Weise für den Selbstbedienungsbetrieb (Einbau eines Münzautomaten), so dass es für die Selbstbedienung an Tankstellen eingesetzt werden kann und überhaupt von ungelernten Bedienungspersonen durchgeführt werden kann.

Damit aggressive Chemikalien verarbeitet werden können, ist es statt der Verwendung von Pumpen vorgesehen, sogenannte Injektoren zu verwenden. Diese Injektoren wirken wie Wasserstrahlpumpen, wobei an die Ansaugleitung die Chemikalienleitung angeschlossen ist. Damit mehrere Chemikalien ausgewählt werden können, sind mehrere Chemikalienbehälter vorgesehen, wobei in jeden Behälter eine Chemikalienleitung mündet. Im Leitungsverlauf ist jeweils ein Magnetventil eingebaut, bei dessen Ansteuerung die entsprechende Leitung geöffnet wird und die Chemikalie aus dem Behälter abgesaugt wird. Die verwendeten Injektoren können also auch aggressive Chemikalien ansaugen und dem Wasser- oder Pressluftstrahl beimischen, was mit entsprechend wirkenden Pumpen nicht möglich wäre. Die Magnetventile in den Chemikalienleitungen können direkt über am Handgriff der Pistole angeordnete Wahlschalter angesteuert werden. Es ist sowohl eine drahtlose als auch eine drahtgebundene Ansteuerung möglich. Ebenso können die Wahlschalter an der Frontseite des Gerätes angeordnet werden.

Damit eine teure und zeitaufwendige Spülung der Leitungen beim Wechsel von einer Chemikalie auf die andere entfällt, ist es vorgesehen, daß die Chemikalienleitungen unmittelbar in der Pistole in eine gemeinsame Ansaugleitung münden, so daß beim Wechsel von einer Chemikalie auf die andere schlagartig statt der einen Leitung die andere eingeschaltet wird und ein teures Spülen oder Entleeren der vorher benutzten Chemikalienleitung entfällt.

Weitere Merkmale des Anmeldungsgegenstandes sind Gegenstand der übrigen Unteransprüche.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im folgenden wird die Erfindung anhand von lediglich einen Ausführungsweg darstellenden Zeichnungen näher erläutert.

Hierbei gehen aus den Zeichnungen und ihrer Beschreibung weitere erfindungswesentliche Merkmale und Vorteile der Erfindung hervor.

Es zeigen:

Fig. 1 schematisiert der Leitungsverlauf einer Mehrzweck-Reinigungsmaschine mit Hochdruck-, Niederdruck - und Luftteil;

Fig. 2 schematisiert der Leitungsverlauf für eine Preßluftpistole mit Zumischung von Chemikalien in den Luftstrom.

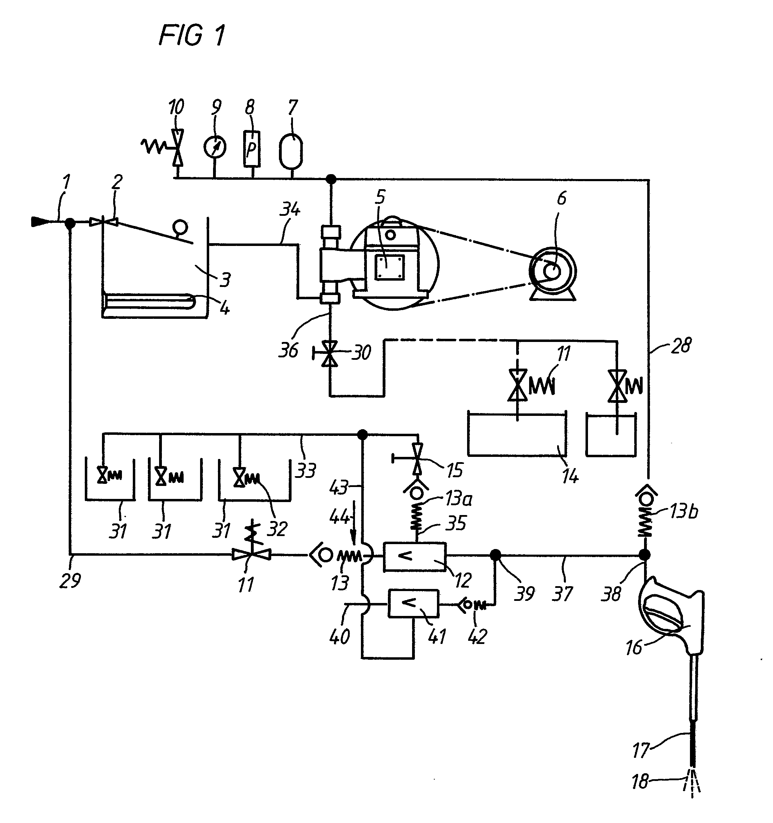

Gemäss Fig. 1 ist an einem Wasserzulauf 1 ein Schwimmerventil 2 angeordnet, das den Wasserstand in einem mit - tels Heizstäben 4 elektrisch beheizten Boiler 3 konstant hält. Die Wassertemperatur wird mittels Thermostaten vorzugsweise auf eine Temperatur von 45°C eingestellt und geregelt. Stromaufwärts des Schwimmerventils 2 ist der Abzweig mittels der Niederdruckleitung 29 für den Niederdruckteil. Über die Niederdruckleitung 29 wird das Wasser in den Niederdruckteil eingespeist, während über die Leitung 34 das Wasser der Hochdruckpumpe 5 zugeführt wird.

Die Niederdruckleitung 29 mündet in ein Magnetventil 11, das von einem Betätigungsschalter zur Einschaltung des Niederdruckteils angesteuert wird, wobei sich dieser Betätigungsschalter entweder am Gehäuse des Gerätes befindet oder unmittelbar am Handgriff der Sprühpistole 16.

Von dem Magnetventil 11 führt die Niederdruckleitung über ein Rückschlagventil 13 zu einem Injektor 12. Das Rückschlagventil 13 hat die Aufgabe, das Hochdruckmedium, das über die Hochdruckleitung 28 in die Sprühpistole 16 geführt wird, von dem Niederdruckteil fernzuhalten. Hierdurch soll eine Einspeisung des Hochdruckmediums in den Wasserzulauf 1 verhindert werden.

Der Injektor 12 ist gemäss der oben stehenden Beschreibung im Prinzip wie eine Wasserstrahlpumpe aufgebaut. In der Leitung 35 wird Unterdruck erzeugt und über ein Rückschlagventil 13a und ein Dosierventil 15

-8-

werden verschiedene Chemikalien aus der Saugleitung 33 abgesaugt. An der Saugleitung 33 setzen mehrere Chemikalienleitungen an, von denen jede mit einem Magnetventil 32 abgeschlossen ist. Bei Öffnung des jeweilig ausgewählten Magnetventils 32 wird aus dem entsprechenden Chemikalienbehälter 31 die gewünschte Chemikalie abgesaugt. Der Wahlschalter zur Ansteuerung der Magnetventile kann gemäss der vorstehenden Beschreibung im Handgriff der Sprühpistole 16 oder am Gerät angeordnet sein. In dem Injektor 12 wird die Chemikalie dem Niederdruck-Wasserstrahl beigemischt und über die Leitung 37 und die Anschlußleitung 38 der Sprühpistole 16 zugeführt. Im Handgriff der Sprühpistole 16 ist ein Abschaltventil vorhanden, bei dessen Öffnung ein Sprühstrahl über das Sprührohr 17 und die Düse 18 abgegeben wird.

Im Gerät ist gleichzeitig noch ein Hochdruckteil vorhanden. Der Hochdruckteil besteht aus einer Hochdruckpumpe 5, die über die Leitung 34 erwärmtes Wasser aus dem Boiler 3 absaugt. An der Saugseite der Hochdruckpumpe 5 ist gleichzeitig noch die Leitung 36 angeschlossen, in deren Verlauf ein Dosierventil 30 angeordnet ist. Über diese Leitung 36 können ebenfalls Chemikalien aus Zusatzmittelbehältern 14 abgesaugt werden , wobei ebenfalls fernbetätigbare Magnetventile 11 in den entsprechenden Chemikalienleitungen angeordnet sind.

Statt der Verwendung zweier verschiedener Chemikalienbehälter 14 bzs. 31 kann es auch vorgesehen sein, daß mittels eines Umschaltventils die Saugleitung 36 an der Saugleitung 33 des Niederdruckteils ansetzt und dort die Chemikalien aus den Chemikalienbehältern 31 ansaugt.

Die Zumischung von Chemikalien im Hochdruckteil kann jedoch auch entfallen.

Der Chemikalienstrom an der Leitung 36 wird mit dem Wasserstrom an der Leitung 34 vermischt und in der Hochdruckpumpe 5 hoch verdichtet. Der hoch verdichtete Wasserstrahl wird über die Hochdruckleitung 28 und das Rückschlagventil 13b der Sprühpistole 16 zugeführt. Das Rückschlagventil 13b verhindert, daß Niederdruckmedium über die Leitung 37 in die Hochdruckleitung 28 eingespeist wird.

An der Hochdruckseite ist noch ein Sicherheitsventil 10, ein Manometer 9 und ein Hydrospeicher 7 angeordnet. Die Hochdruckpumpe 5 wird von einem Elektromotor 6 angetrieben.

Durch die Zusammenführung der Hochdruckleitung 28 mit der Niederdruckleitung 37 an der Sprühpistole 16 ist es demzufolge möglich, mit ein und derselben Sprühpistole sowohl einen Niederdruckstrahl großer Menge mit geringem Druck als auch einen Hochdruckstrahl mit relativ geringer Menge abzugeben.

Zusätzlich kann in einer Weiterbildung des vorliegenden Erfindungsgegenstandes der Niederdruckteil auch mit einem Preßluftteil kombiniert werden. Hierzu ist in der Leitung 37 des Niederdruckteils ein T-Stück 39 angeordnet, an dem eine Leitung ansetzt, die über ein Rückschlagventil 42 am Ausgang eines Injektors 41 ansetzt. An der Eingangsseite des Injektors 41 wird über den Anschluß 40 Preßluft zugeführt. Über die Saugleitung 43 und ggf. über ein in der Saugleitung 43 angeordnetes Rückschlag- sowie Dosierventil wird in Pfeilrichtung 44 ein Chemikalienstrom aus der Saugleitung 43 abgesaugt. Die Magnetventile 32 können entsprechend angesteuert werden, so daß jeweils die gewünschte Chemikalie ausgewählt wird.

Es erfolgt somit auch eine Einspeisung eines Preßluftstrahles, dem ggf. Chemikalien beigemischt sind, in die Sprühpistole 16, wobei der Vorteil erzielt wird, daß die Leitungen stromabwärts des T-Stücks 39 mittels Preßluft saubergeblasen werden und mittels der Sprühpistole und der Düse 18 Wasserrückstände auf dem zu reinigenden Gegenstand mittels Preßluft entfernt werden können.

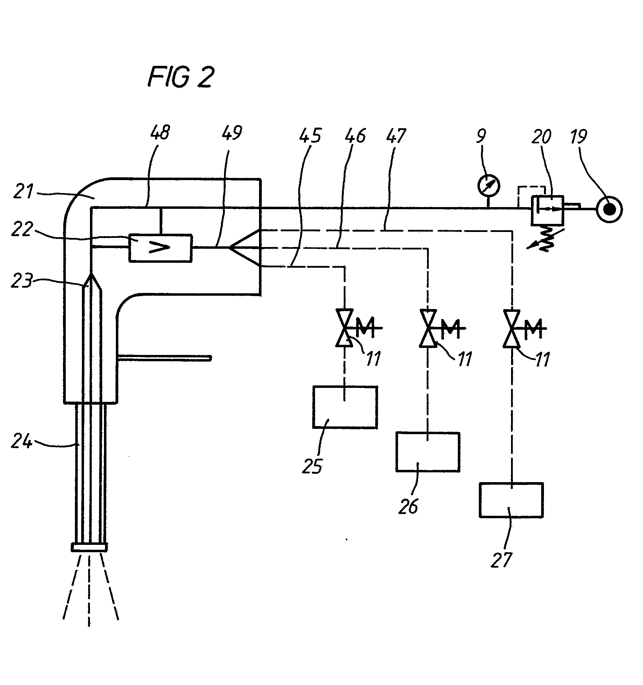

Das Ausführungsbeispiel gemäss Fig. 2, welches eine preßluftbetriebene Sprühpistole zeigt, kann die Sprühpistole 16 in Fig. 1 ersetzen. Das Ausführungsbeispiel gemäss Fig. 2 kann also eine zusätzliche Leitung 38 aufweisen, so daß sowohl ein Hochdruck- als auch ein Niederdruck-Wasserstrahl über die Pistole 21 versprüht werden kann. Zusätzlich kann auch ein mit Chemikalien angereicherter Preßluftstrom versprüht werden, wie es jetzt anhand der Fig. 2 näher erläutert wird.

Die in Fig. 2 gezeigte Sprühpistole 21 ist also zum Versprühen eines mit Chemikalien angereicherten Wasserstrahls als auch eines mit Chemikalien angereicherten Preßluftstrahles geeignet.

Im Ausführungsbeispiel nach Fig. 2 wird über den Anschluß 19 Preßluft eingespeist, die über einen Druckminderer 20 und ein Manometer 9 läuft. Der Injektor 22 zur Zumischung der Chemikalien dem Luft- oder Wasserstrom ist im Handgriff der Pistole 21 selbst eingebaut. Kurz stromaufwärts des Injektors sind verschiedene Ansaugleitungen 45,46,47 angeordnet, über die die Chemikalien aus Zusatzmittelbehältern 25,26,27 nach Einschaltung entsprechender Magnetventile 11 zugeführt werden.

Nach Umschaltung oder Einschaltung des entsprechenden Magnetventils 11 wird dann mittels des Injektors 22 unmittelbar die Chemikalie angesaugt, wodurch ein umständliches Leersaugen und Spülen der Ansaugleitungen, wie sie bei Anordnungen des Standes der Technik bekannt ist, entfällt. Diese Anordnung findet insbesondere Anwendung beim Versprühen teurer Chemikalien, mit deren Verwendung sparsam umgegangen werden muß.

Über die Preßluftleitung 48 wird eine Luftmantelabschirmung im Luftverteiler 23 erreicht, d.h. der im Luftverteiler 23 abgebende Preßluftstrahl wird von dem (über die Leitung 48 eingespeisten Preßluftstrahl mantelförmig umgeben, um eine zu große Aufspreizung des aus dem Sprührohr 24 austretenden Preßluftstrahles zu vermeiden. Die Leitung 49, in der die Ansaugleitungen 45,46,47 einmünden, ist besonders kurz ausgeführt, so daß kurze Chemikalienwege die Folge sind.

In analoger Weise können die Magnetventile 11 über einen Wahlschalter im Handgriff der Sprühpistole 21 angesteuert werden oder auch über einen Wahlschalter, der im Gerät eingebaut ist.

Das neue Arbeitsverfahren und die hierzu erforderlichen Vorrichtungen werden erfindungsgemäss besonders vorteilhaft in einer Mehrphasenmaschine verwirklicht, deren Gehäuse hierfür wesentliche , erfinderische Merkmale aufweist.

Diese Erfindung betrifft demnach ein Gehäuse für ein Mehrzweckreinigungsgerät, welches mit Hochdruck- und/oder Niederdruck einen (gegebenenfalls erwärmten und mit Chemikalien angereicherten) Wasserstrom einer oder mehreren Sprühlanzen und/oder Waschbürsten zuführt, wobei das Wasser aus einem im Inneren des Gehäuses angeordneten Wasserbehälter dem Geräteteil des Reinigungsgerätes zuführbar ist und die Chemikalienbehälter in einem Aufnahmeraum im Gehäuse angeordnet sind.

Ein derartiges Mehrzweckreinigungsgerät (Mehrphasengerät) wird an Tankstellen, in Kraftfahrzeugwerkstätten und gegebenenfalls auch in privatem Gebrauch verwendet. Es dient zur Reinigung von Gegenständen, wie z.B. Automobilen, im Fabrikbereich hergestellte Gegenstände zur Endreinigung, zur Reinigung von Werkzeugen und dergleichen. Kennzeichnend für ein solches Mehrzweckreinigungsgerät ist, daß ein solches Reinigungsgerät sowohl Sprühlanzen aufweist, mit denen ein Hochdruckreinigungsstrahl versprüht werden kann als auch Waschbürsten, mit denen (im Vergleich zum Hochdruckstrahl) eine größere Menge von Wasser mit Niederdruck auf den zu reinigenden Gegenstand aufgebracht werden kann. Der Hochdruck-Wasserstrahl wird durch eine von einemElektromotor angetriebene Hochdruckpumpe erzeugt, währenddessen der Niederdruck unter Umgehung der Hochdruckpumpe aus einem Wasserbehälter entnommen wird. Damit derartige Mehrzweckreinigungsgeräte unabhängig sind vom Wasserdruck und auch eine größere Menge von Wasser in erwärmtem Zustand unter Zumischung von Chemikalien abgeben können, werden diese Geräte nicht unmittelbar aus der Wasserleitung gespeist, sondern es ist ein Wasserbehälter vorhanden. Um große Mengen von Wasser abgeben zu können, muß der Wasserbehälter relativ groß dimensioniert werden, was die Geräteabmessungen eines solchen Mehrzweckreinigungsgerätes sehr stark vergrößert. Ebenso muß in einem solchen Mehrzweckreinigungsgerät ein Aufnahmeraum für die Aufbewahrung von Chemikalienbehältern und der Geräteteil (Hochdruckpumpe, Steuereinrichtungen, Elektromotor) vorgesehen sein. Die bekannten Geräte weisen alle relativ große Abmessungen auf, wobei ferner der Nachteil besteht, daß solche bekannten Geräte nur bedingt für den Wintereinsatz geeignet sind. Im Wintereinsatz besteht nämlich die Gefahr des Einfrierens des Wassers im Wasserbehälter und die dem Wasserstrom zuzumischenden Chemikalien werden in ihrer Viskosität so stark erhöht, daß eine Zumischung praktisch nicht mehr möglich ist. Zusätzlich können die Leitungen innerhalb des Gerätes einfrieren, wodurch eine unmittelbare Beschädigungsgefahr besteht.

Die Erfindung hat sich die Aufgabe gestellt, ein Gehäuse für ein Mehrzweckreinigungsgerät der eingangs genannten Art so weiterzubilden, daß bei relativ kleinen Gehäuseabmessungen ein Winterbetrieb möglich ist, ohne daß die Gefahr des Einfrierens und der Beschädigung des Gerätes besteht.

Zur Lösung der gestellten Aufgabe ist die Erfindung dadurch gekennzeichnet, daß das Gehäuse mindestens zweiteilig ausgebildet ist und zwar aus einem auf Rollen verfahrbaren, nach oben offenen Metallgehäuse, das an der Oberseite von einer Abdeckhaube abgedeckt ist, daß parallel zu einer vertikalen Wand des Gehäuses der Wasserbehälter angeordnet ist, der sich bezüglich seiner Höhe sowohl in das Metallgehäuse als auch in die Abdeckhaube erstreckt und daß der Wasserbehälter mindestens eine Wand des Aufnahmeraumes für die Chemikalienbehälter bildet.

Die gekennzeichnete technische Lehre des Anmeldungsgegenstandes lässt mehrere Ausführungsformen zu. In einer ersten Ausführungsform ist es vorgesehen, daß der Wasserbehälter die Rückwand des Metallgehäuses bildet und daß deshalb der Aufnahmeraum zur Aufnahme der Chemikalienbehälter vor der Rückwand angeordnet ist, das heisst , die Vorderseite des Wasserbehälters bildet ihrerseits die Rückwand des Aufnahmebehälters für die Chemikalien. Damit der Aufnahmeraum für die Chemikalienbehälter besonders leicht zugänglich ist, ist eine an der Frontseite angebrachte Fronttür vorgesehen, bei deren Öffnung die Chemikalienbehälter aus dem Aufnahmeraum entnommen oder hineingestellt werden können.

Damit der Flüssigkeitsstand der Chemikalienbehälter auch bei geschlossener Fronttür von aussen her sichtbar ist, ist es vorgesehen, daß die Chemikalienbehälter aus einem zumindest luziden (wenn nicht vollständig durchsichtigen) Kunststoffmaterial bestehen und daß in der Fronttür Sichtschlitze angeordnet sind, durch die hindurch der Flüssigkeitspegel der Chemikalienbehälter sichtbar ist (Anspruch 4).

In einer weiteren, nicht näher dargestellten Ausführungsform ist es aber genauso möglich, daß der Wasserbehälter eine Seitenwand des Metallgehäuses bildet und daß nicht eine Fronttür vorgesehen ist, sondern eine Seitentür, um den Aufnahmeraum allseitig abzuschliessen.

Gemäss dem Gegenstand des Anspruches 2 ist es vorgesehen, daß die Abdeckhaube schwenkbar am Metallgehäuse gelagert ist. Hierdurch ergibt sich der wesentliche Vorteil, daß der Geräteteil des Mehrzweckreinigungsgerätes besonders leicht zugänglich ist, denn gemäss dem Gegenstand des Anspruches 5 wird die obere Deckwand des Aufnahmeraumes für die Chemikalienbehälter
durch eine Montageplatte gebildet, auf der der Geräteteil des Gerätes montiert ist, wobei die Montageplatte
auf seitlich am Metallgehäuse befestigten Haltestreifen
abnehmbar aufgelegt ist. Hierdurch wird der Vorteil
erzielt, daß auch der Geräteteil sich im (oberen) Bereich des Wasserbehälters befindet und demzufolge im
Winterbetrieb selbst auch durch den Wasserbehälter
(durch Wärmestrahlung und Konvektion) beheizt wird.

Es ergibt sich ein weiterer wesentlicher Vorteil,
gemäss dem Merkmal des Anspruches 6, daß die Bedienungs-
und Anzeigeelemente des Gerätes in einer an der Frontseite der Abdeckhaube befestigten Bedienungstafel
angeordnet werden können und deshalb von vorne besonders gut sichtbar sind und bei Abklappen der Abdeckhaube von hinten zugänglich sind.

Dadurch, daß die Rückwand des gesamten Gerätes durch
den Metallbehälter gebildet ist, ergibt sich, daß die
Abdeckhaube selbst keine Rückwand besitzt, sondern im
Bereich der Rückwand des Gerätes geöffnet ist. Gemäss
dem Gegenstand des Anspruches 7 ragt die Rückwand
des Gerätes also über die obere, umlaufende, horizontale Begrenzung des Metallgehäuses hinaus und diese
rückseitige Abdeckung des Gerätes bildet die Rückwand
der in diesem Bereich offenen Abdeckhaube. Hierdurch
ergibt sich beim Abklappen der Abdeckhaube nach vorne
eine besonders gute Zugänglichkeit zum Inneren des
Gerätes, weil die Rückwand der Abdeckhaube fehlt und
bei abgeklappter Abdeckhaube die Zugänglichkeit zu
dem Geräteinneren nicht stört.

Gemäss dem Gegenstand des Anspruches 8 sind an den Seitenwänden des Metallgehäuses Ablagebügel zur Ablage der Sprühlanzen, Waschbürsten oder Werkzeuge angeordnet, was die Bedienungssicherheit und -einfachheit des Gerätes noch weiter verbessert.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnung näher erläutert. Hierbei gehen aus den Zeichnungen und ihrer Beschreibung weitere erfindungswesentliche Merkmale und Vorteile der Erfindung hervor.

Es zeigen:

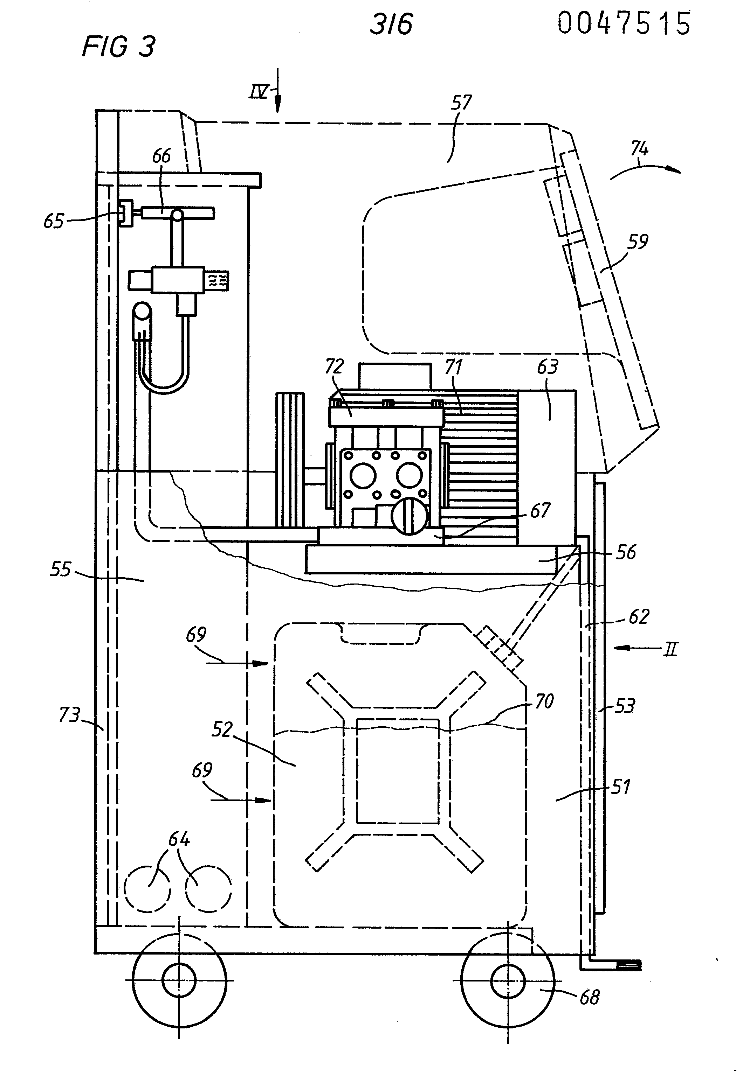

Fig. 3 schematisiert gezeichneter Längsschnitt durch ein Mehrzweckgerät;

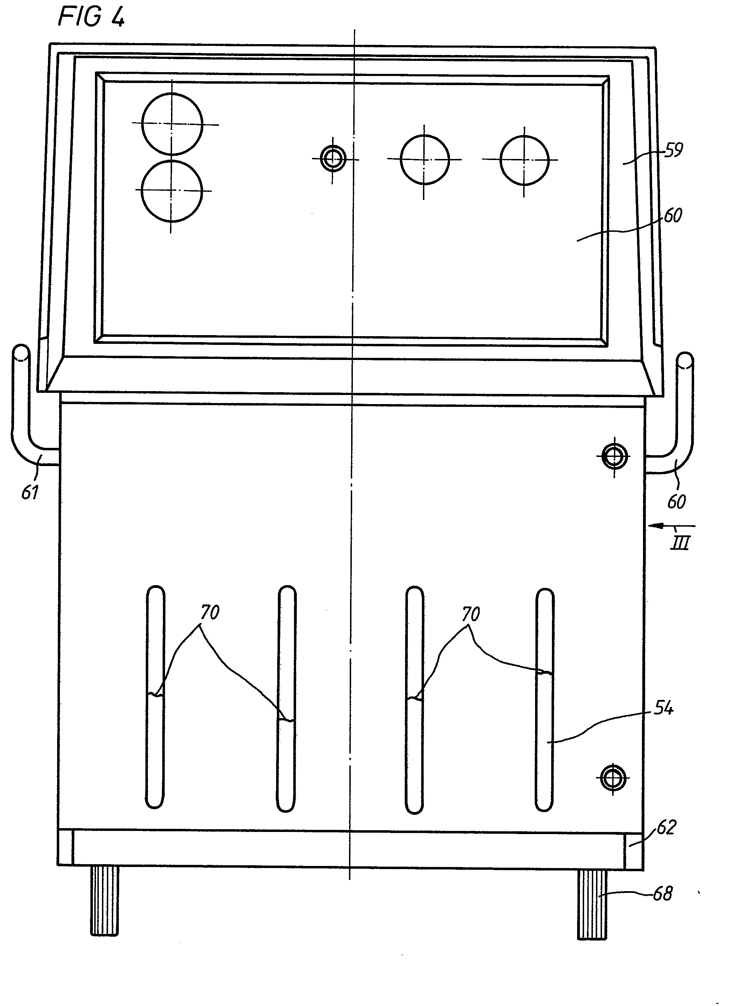

Fig. 4 Seitenansicht in Richtung des Pfeiles II in Fig. 3;

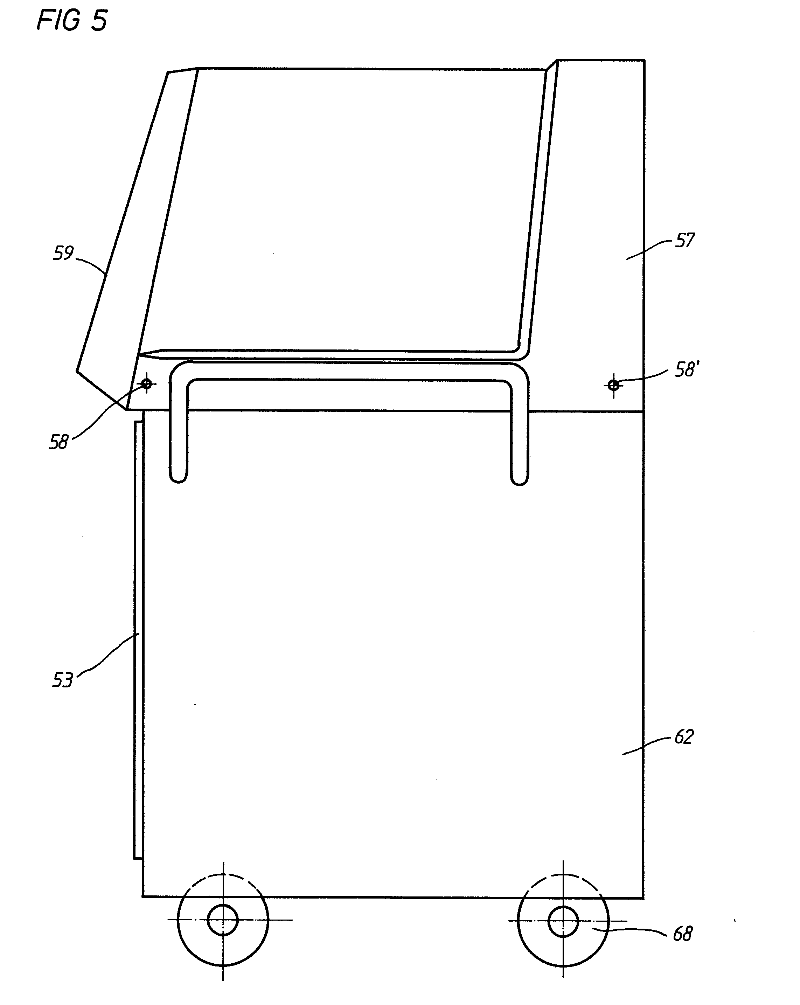

Fig. 5 Seitenansicht in Richtung des Pfeiles III in Fig. 4;

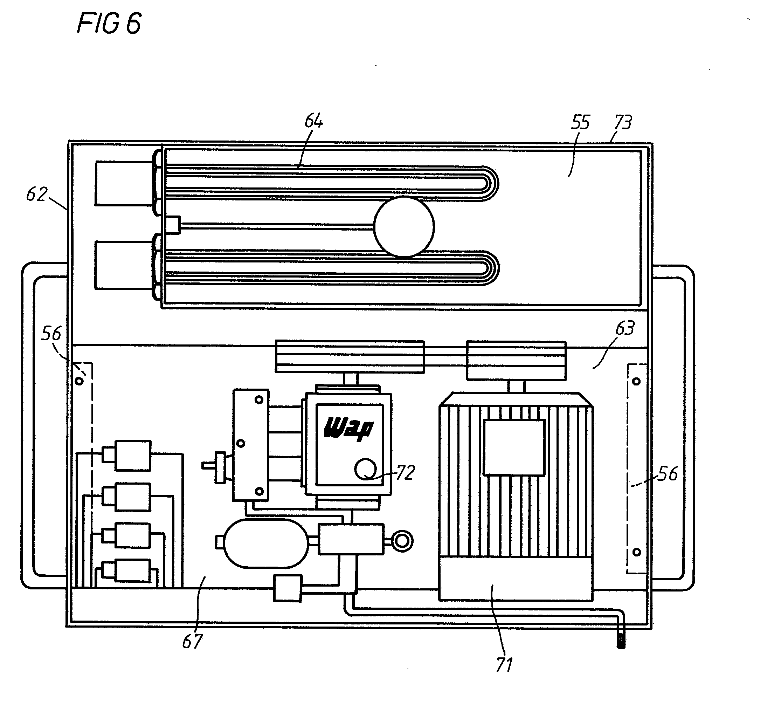

Fig. 6 Draufsicht auf das Gerät in Richtung des Pfeiles IV nach Fig. 3 bei abgenommener Abdeckhaube.

Das Gerät nach dem Ausführungsbeispiel weist ein zweiteiliges Gerät auf. Ein ringsum geschlossenes, nach oben geöffnetes Metallgehäuse 62 ist auf Rollen 68 verfahrbar gelagert . Das Metallgehäuse 62 weist eine hintere vertikal aufragende Rückwand 73 auf, in deren Bereich der parallel zur Rückwand 73 angeordnete Wasserbehälter 55 angeordnet ist. Der Wasserbehälter 55 erstreckt sich also längs der gesamten Rückwand 73 parallel zu dieser und greift auch in den oberen Teil des Gehäuses, der von der an der Rückwand offenen Abdeckhaube 57 abgeschlossen ist. Die Abdeckhaube 57 ist mittels Schwenklagern 58 nach vorne in Pfeilrichtung 74 abklappbar.

In einer anderen, nicht näher dargestellten Ausführungsform kann es aber auch vorgesehen sein, daß die Abdeckhaube in hinteren Schwenklagern 58' schwenkbar am Metallgehäuse 62 gelagert ist.

Das Metallgehäuse 62 definiert einen unteren Aufnahmeraum 51, in dem mehrere Chemikalienbehälter 62 parallel nebeneinander angeordnet sind. Der Aufnahmeraum 51 ist von vorne her durch eine Fronttür 53 zugänglich, in der Sichtschlitze 54 angeordnet sind. Bei der Verwendung von Chemikalienbehältern aus einem luziden Kunststoffmaterial ist es deshalb möglich, bei geschlossener Fronttür53 durch die Sichtschlitze 54 gemäss Figur 4 den Flüssigkeitspegel 70 in den einzelnen Chemikalienbehältern 52 zu beobachten.

Die Rückwand des Aufnahmeraumes 51 wird durch die Vorderseite des Wasserbehälters 55 gebildet, der demzufolge in Pfeilrichtung 69 eine Wärmestrahlung abgibt, welche die Chemikalienbehälter 52 aufheizt und vor dem Einfrieren bzw. Aussulzen schützt.

Im unteren Teil des Wasserbehälters 55 sind Heizstäbe 64 vorgesehen, mit denen das Wasser elektrisch aufgeheizt wird.

Die Oberseite des Aufnahmeraumes 51 wird durch eine Montageplatte 47 gebildet, die gemäss Fig. 6 auf an den Seitenwänden angebrachten Haltestreifen 56 abnehmbar aufgelegt ist. Die Befestigung erfolgt hier beispielsweise mittels Bolzen.

Auf der Montageplatte 67 sind sämtliche Funktionsteile des Mehrzweckreinigungsgerätes montiert. Der Geräteteil besteht beispielsweise aus einer Hochdruckpumpe 72, die von einem Elektromotor 71 über Keilriemen angetrieben wird.

Zusätzlich sind noch Steuerungsteile, Druckspeicher, Ventile und dergleichen auf der Montageplatte befestigt. Zu Reparatur- oder Montagezwecken kann damit die gesamte Montageplatte 67 herausgenommen werden. Dadurch, daß sich der Wasserbehälter 55 auch noch in den Bereich der Abdeckhaube 57 erstreckt und der Geräteteil 63 auf der Montageplatte 67 ebenfalls in die Abdeckhaube 57 sich hineinerstreckt, wird der wesentliche Vorteil erzielt, daß auch der Geräteteil 63 von dem Wasserbehälter 55 im Winter beheizt wird und daß deshalb ein Einfrieren des Geräteteils 63 vermieden wird.

Der Wasserbehälter 55 hat bei 65 einen Wasserzulauf, der in ein Schwimmerventil 66 mündet.

Mit dem großvolumigen Wasserbehälter 55 ist es deshalb möglich, sowohl einen Hochdruckreinigungsstrahl relativ geringer Wassermenge zu erzeugen als auch einen Niederdruck-Reinigungsstrahl großer Wassermenge. Die Wasserabgabemenge eines solchen Gerätes ist deshalb besonders groß und kontinuierlich und hängt nicht vom Wasserzuleitungsdruck oder ähnlichen Unwägbarkeiten ab.

An der Frontseite 59 der Abdeckhaube 57 ist eine Bedienungstafel 60 mit den erforderlichen Anzeige- und Bedienungselementen angeordnet. Es ergibt sich eine besonders gute Ablesbarkeit, wenn die Bedienungstafel 60 in Richtung zur Vertikalen, nach hinten geneigt ist, wie die Figuren 3 und 4 zeigen.

Seitlich am Metallgehäuse 62 sind noch Ablagebügel 61 angeordnet, um das Ablegen der Schläuche für die Sprühlanzen bzw. für die Waschbürsten, für Werkzeuge und dergleichen zu ermöglichen.

Mit dem erfindungsgemässen Gerät wird ein universell einsetzbares Mehrzweckreinigungsgerät vorgeschlagen, das sich durch besonders kleine Abmessungen auszeichnet und mit dem auch problemlos ein Winterbetrieb möglich ist, ohne daß eine elektrische Zusatzheizung oder ähnliche stromverbrauchende und teure Elemente vorgesehen werden müssen.

-20-

Patentansprüche
_____

1. Arbeitsverfahren zur Reinigung von Gegenständen im Industriebereich, insbesondere für den Pflegedienst an Tankstellen, bei Speditionen, im Kfz.-Bereich sowie im Landwirtschafts- und Haushaltsbereich, bei dem der zu reinigende Gegenstand mittels einer Sprühpistole mit einem Wasser-Hochdruckstrahl gewaschen wird und dem Hochdruckstrahl reinigende und pflegende Chemikalien beigemischt sind, d a d u r c h g e k e n n z e i c h n e t , daß in einem ersten Arbeitsgang die Chemikalien mit Niederdruck - z.B. dem Wasserleitungsdruck - aufgesprüht werden, daß in einem zweiten Arbeitsgang die Chemikalien bei abgeschaltetem Niederdruck einwirken und daß in einem dritten Arbeitsgang die Chemikalien mit dem Hochdruckstrahl abgewaschen werden.

2. Arbeitsverfahren nach Anspruch 1, d a d u r c h g e k e n n z e i c h n e t , daß in einem vierten Arbeitsgang die von dem Hochdruckstrahl herrührenden Wasserrückstände auf dem Gegenstand mittels Preßluft abgeblasen werden.

3. Arbeitsverfahren nach Anspruch 1, d a d u r c h g e k e n n z e i c h n e t , daß zumindest der Wasser-Hochdruckstrahl erwärmt ist und eine Temperatur von etwa 30 - 60° C aufweist.

4. Arbeitsverfahren nach einem der Ansprüche 1 - 3, d a d u r c h g e k e n n z e i c h n e t , daß der Nieder- und Hochdruckstrahl und gegebenenfalls auch der Preßluftstrahl über einen gemeinsamen Schlauch einer Reinigungspistole zugeführt werden.

5. Arbeitsverfahren nach Anspruch 1 oder 4, d a d u r c h g e k e n n z e i c h n e t , daß auch dem Hochdruckstrahl reinigende und pflegende Chemikalien beigemischt werden.

6. Arbeitsverfahren nach Anspruch 2 oder 4, d a d u r c h g e k e n n z e i c h n e t , daß dem Preßluftstrahl reinigende und pflegende Chemikalien beigemischt sind.

7. Vorrichtung zur Ausübung des Verfahrens nach Anspruch 1 und einem der Ansprüche 2 - 6, d a d u r c h g e k e n n z e i c h n e t , daß der Niederdruckwasserstrahl vom Wasserzulauf (1) des Gerätes abzweigt und daß der Wasserzulauf über ein Schwimmerventil (2) in einen elektrisch beheizten Wasserbehälter (3) mündet, der dem Hochdruckteil des Gerätes zugeordnet ist.

8. Vorrichtung nach Anspruch 7, d a d u r c h g e k e n n z e i c h n e t , daß der Ausgang (Leitung 37) des Niederdruckteils und der Ausgang (Leitung 28) des Hochdruckteils über ein Rückschlagventil (13b) in eine gemeinsame, zur Sprühpistole (16) führende Leitung (38) münden.

9. Vorrichtung nach Anspruch 8, d a d u r c h g e k e n n z e i c h n e t , daß in den Ausgang (Leitung 37) des Niederdruckteils über ein Rückschlagventil (42) der Preßluftteil des Gerätes einmündet.

10. Vorrichtung nach Anspruch 8 oder 9, d a d u r c h   g e k e n n z e i c h n e t , daß die Beimischung von Chemikalien in den Niederdruck- oder den Preßluftteil über Injektoren (12,41) erfolgt, an deren Saugseite (Leitung 35 oder 43) ein oder mehrere Chemikalienleitungen über Magnetventile (32) ange - schlossen sind.

11. Vorrichtung zur Ausübung des Verfahrens nach Anspruch 2 und einem oder mehreren der Ansprüche 3 - 10, d a d u r c h   g e k e n n z e i c h n e t, daß zum Zumischen von Chemikalien zu einem Preßluft- oder Wasserstrahl der die Chemikalien ansaugende Injektor (22) in der Sprühpistole (21) angeordnet ist und die verschiedenen Ansaugleitungen (45,46,47) zur Zuführung der Chemikalien in eine in der Sprühpistole (21) angeordnete gemeinsame Leitung (49) münden.

12. Vorrichtung nach Anspruch 10 oder 11, d a d u r c h   g e k e n n z e i c h n e t , daß die in den Ansaugleitungen (33,45,46,47) der Chemikalien-Zusatzmittelbehälter (25,26,27,31) angeordneten Magnetventile (11,32) über am Handgriff der Sprühpistole (16,21) angeordnete Wahlschalter drahtgebunden oder drahtlos steuerbar sind.

13. Gehäuse für ein Mehrzweckreinigungsgerät, welches mit Hochdruck- und/oder Niederdruck einen (gegebenenfalls erwärmten und mit Chemikalien angereicherten) Wasserstrom einer oder mehreren Sprühlanzen und/oder Waschbürsten zuführt, wobei das Wasser aus einem im Inneren des Gehäuses angeordneten Wasserbehälter dem Geräteteil des Reinigungsgerätes zuführbar ist und die Chemikalienbehälter in einem Aufnahmeraum im Gehäuse angeordnet sind, d a d u r c h   g e k e n n z e i c h n e t, daß das Gehäuse mindestens zweiteilig ausgebildet ist und zwar aus einem auf Rollen (68) verfahrbaren, nach oben offenen Metallgehäuse (62), das an der Oberseite von einer Abdeckhaube (57) abgedeckt ist, daß parallel zu einer vertikalen Wand des Gehäuses der Wasserbehälter (55) angeordnet ist, der sich bezüglich seiner Höhe sowohl in das Metallgehäuse (62) als auch in die Abdeckhaube (57) erstreckt und daß der Wasserbehälter (55) mindestens eine Wand des Aufnahmeraumes (51) für die Chemikalienbehälter (52) bildet.

14. Gehäuse nach Anspruch 13, d a d u r c h   g e k e n n z e i c h n e t, daß die Abdeckhaube (57) schwenkbar (Schwenklager 58 oder 58') am Metallgehäuse (62) gelagert ist.

15. Gehäuse nach den Ansprüchen 13 oder 14, d a d u r c h   g e k e n n z e i c h n e t , daß der Wasserbehälter (55) parallel zur Rückwand (73) des Metallgehäuses (62) angeordnet ist und daß die vordere Wand des Wasserbehälters (55) im wesentlichen die Rückwand des Aufnahmeraumes (51) für die Chemikalienbehälter (52) bildet.

16. Gehäuse nach Anspruch 15, d a d u r c h
g e k e n n z e i c h n e t , daß der Aufnahmeraum(51)
für die Chemikalienbehälter (52) zur Frontseite des Gerätes mit einer schwenkbaren Fronttür (53) abgeschlossen ist, daß die Chemikalienbehälter aus einem zumindest
luziden Kunststoffmaterial bestehen und daß in der
Fronttür (53) Sichtschlitze (54) angeordnet sind, durch
die hindurch der Flüssigkeitspegel (70) der Chemikalienbehälter (52) sichtbar ist.

17.Gehäuse nach einem der Ansprüche 13 bis 16,
d a d u r c h   g e k e n n z e i c h n e t , daß die
obere Deckwand des Aufnahmeraumes (51) für die Chemikalienbehälter (52) durch eine Montageplatte (67) gebildet ist, auf der der Geräteteil (63) des Gerätes
montiert ist und daß die Montageplatte (67) auf seitlich am Metallgehäuse (67) befestigten Haltestreifen
(56) abnehmbar aufgelegt ist.

18. Gehäuse nach einem der Ansprüche 13 bis 17,
d a d u r c h   g e k e n n z e i c h n e t,
daß die Bedienungs- und Anzeigeelemente des Gerätes
in einer an der Frontseite (59) der Abdeckhaube (57)
befestigten Bedienungstafel (60) angeordnet sind.

19. Gehäuse nach einem der Ansprüche 13 bis 18,
d a d u r c h   g e k e n n z e i c h n e t,
daß die Rückwand (73) des Gerätes über die obere,
umlaufende horizontale Begrenzung des Metallgehäuses
(62) ragt und die obere rückseitige Abdeckung der
im Bereich der Rückwand (73) offenen Abdeckhaube (57)
bildet.

20 . Gehäuse nach einem der Ansprüche 13 bis 19,
d a d u r c h   g e k e n n z e i c h n e t, daß an
den Seitenwänden des Metallgehäuses (62) Ablagebügel
zur Ablage der Sprühlanzen, Waschbürsten oder Werk-

-25-

zeuge angeordnet sind.

FIG 1

FIG 2

FIG 3

316     0047515

FIG 4

59

60

61

60

III

70

70

54

62

68

FIG 5

59

57

58'

58

53

62

68

0047515

FIG 6